# EUROPEAN PATENT SPECIFICATION

(11) **EP 0 982 508 B1**
(45) Date of publication and mention of the grant of the patent: **28.07.2004**
(21) Application number: 99306831.1
(22) Date of filing: 27.08.1999
(51) Int. Cl.: F16C 19/18, F16C 33/80

(54) **A compound shaft/bearing apparatus, and a spindle motor and a swing arm for a hard disk drive means including such bearing apparatus**
Zusammengesetzte Welle/Lagereinheit,und Spindelmotor und Schwingarm für einen Festplattenantrieb der eine solche Lagereinheit aufweist
Arbre/palier composé et moteur de broche et bras pivotant pour un entraînement de disque dur comportant un tel palier

(30) Priority: 27.08.1998 JP 24220998
(43) Date of publication of application: 01.03.2000
(73) Proprietor: Minebea Kabushiki Kaisha, Kitasaku-gun, Nagano-ken (JP)
(72) Inventor: Obara, Rikuro, Kitasaku-gun, Nagano-ken (JP)
(74) Representative: Warren, Anthony Robert

(56) References cited:
- EP-A- 0 752 537
- US-A- 5 547 291
- US-A- 5 588 753

## Description

The present invention relates to a compound shaft/bearing apparatus suitable for the rotating portion of so called precision mechanical equipment, and to a spindle motor and a swing arm for a hard disk drive which includes such bearing apparatus.

A variety of structures of bearing apparatus are known for the rotating portions of precision mechanical equipment. In the case of the prior art as shown in Fig. **7**, and known from US-A-5 547 291, the compound shaft/bearing apparatus includes a stepped shaft 41 having enlarged and reduced diameter shaft portions 41a, 41b, a sleeve outer race 42 surrounding the stepped shaft, and two rows of rotating bodies 44, 45 interposed, respectively, between the enlarged diameter shaft portion 41a and the sleeve outer race 42, and an inner race 43 fitted around the reduced diameter shaft portion 41b and the sleeve outer race 42.

In such compound shaft/bearing apparatus of the prior art, the clearance defined between the enlarged diameter shaft portion of the shaft and the sleeve outer race, and that defined between the inner race and the sleeve outer race, are closed by means of sealing plates 46, 47 on the outside of each of two rows of rotating bodies. This is to prevent the lubricant present around the rotating bodies, e.g. balls 44, 45, rolling recesses 48a, 48b, 49a, 49b, and the retainer 50, from leaking out therefrom.

In the compound shaft/bearing apparatus of the prior art having the above-mentioned structure, a shortage of lubricant often occurs due to the dispersion thereof into the space A defined between the two rows of balls 44, 45. This also causes rotational noise or vibration, and reduces the lifetime of the bearing apparatus.

When a spindle motor including such compound shaft/bearing apparatus of the prior art is used as a driving apparatus for a hard disk drive device, the lubricant dispersed by the high speed rotation of the bearing apparatus into the space A will transform into a lubricant mist and produce turbulence. This turbulence will produce noise or vibration affecting the stillness and the accuracy of the rotation of the motor.

Further, in the swing arm assembly employed as a swing arm for the hard disk drive device, it is necessary to displace the magnetic head accurately along the surface of the hard disk used as the magnetic storage medium by swinging the arm around the shaft accurately. However, a swing arm assembly including a compound bearing apparatus of the prior art is apt to produce rotational noise or vibrations due to deterioration resulting from ageing of the compound bearing apparatus. These rotational noises or vibrations will often lead to disk crash, impairing the reliability of the hard disk drive means.

Accordingly, the object of the present invention is to provide a compound shaft/bearing apparatus having sealing means for preventing lubricant present around the rotating bodies from leaking away into the space defined between the rows of the rotating bodies of the bearings, as well as to the outside of the bearing apparatus, and to provide a spindle motor and swing arm for hard disk drive means including such bearing apparatus.

According to one aspect of the present invention, as defined in claim 1, there is provided a compound shaft/bearing apparatus including a stepped shaft having enlarged and reduced diameter shaft portions, a sleeve outer race surrounding the stepped shaft, and two rows of rotating bodies interposed therebetween, wherein;
the rotating bodies of the first row are disposed between an outer peripheral rolling recess formed directly on an outer peripheral surface of the enlarged diameter shaft portion and a first inner peripheral rolling recess formed directly on the inner peripheral surface of the sleeve outer race,
the rotating bodies of the second row are disposed between an outer peripheral rolling recess formed on an outer periphery of an inner race fitted over the reduced diameter shaft portion of said stepped shaft and a second inner peripheral rolling recess formed directly on the inner peripheral surface of the sleeve outer race,
at the longitudinal outer side of the rotating bodies of the first row, a first outer sealing plate of ring shape having a central aperture is disposed between the inner peripheral surface of the sleeve outer race and the outer peripheral surface of the enlarged diameter shaft portion,
the first outer sealing plate is secured either one of the inner peripheral surface of the sleeve outer race or the outer peripheral surface of the enlarged diameter shaft portion with leaving a slight radial clearance between the inner or outer peripheral surface thereof and the remaining one of the outer peripheral surface of the enlarged diameter shaft portion or the inner peripheral surface of the sleeve outer race to provide a labyrinth seal function,
at the longitudinal outer side of the rotating bodies of the second row, a second outer sealing plate of ring shape having a central aperture is disposed between the inner peripheral surface of the sleeve outer race and the outer peripheral surface of the inner race,
the second outer sealing plate is secured either one of the inner peripheral surface of the sleeve outer race or the outer peripheral surface of the inner race with leaving a slight radial clearance between the inner or outer peripheral surface thereof and the remaining one of the outer peripheral surface of the inner race or the inner peripheral surface of the sleeve outer race to provide a labyrinth seal function,
at the longitudinal inner side of the rotating bodies of the first row, a first inner sealing plate of ring shape having a central aperture is disposed between the inner peripheral surface of the sleeve outer race and the outer peripheral surface of the enlarged diameter shaft portion,
the first inner sealing plate is secured either one of the inner peripheral surface of the sleeve outer race or the outer peripheral surface of the enlarged diameter shaft portion with leaving a slight radial clearance between the inner or outer peripheral surface thereof and the remaining one of the outer peripheral surface of the enlarged diameter shaft portion or the inner peripheral surface of the sleeve outer race to provide a labyrinth seal function,
at the longitudinal inner side of the rotating bodies of the second row, a second inner sealing plate of ring shape having a central aperture is disposed between the inner peripheral surface of the sleeve outer race and the outer peripheral surface of the inner race, and
the second inner sealing plate is secured either one of the inner peripheral surface of the sleeve outer race or the outer peripheral surface of the inner race with leaving a slight radial clearance between the inner or outer peripheral surface thereof and the remaining one of the outer peripheral surface of the inner race or the inner peripheral surface of the sleeve outer race to provide a labyrinth seal function.

Other optional features of the compound shaft/bearing apparatus are defined in claims 2 and 3.

According to another aspect of the present invention, there is provided a spindle motor including a compound shaft/bearing apparatus as defined. The rotor hub, i.e. the rotating member of the spindle motor, is adapted to be journalled on the base of the motor by the compound bearing apparatus.

According to a further aspect of the present invention, there is provided swing arm assembly for use with a hard disk drive device, which includes a compound shaft/bearing apparatus as defined. The compound shaft/bearing apparatus is fitted within a cylindrical portion forming the base of the swing arm to rotatably journal the swing arm.

Various embodiments of the present invention will now be described with reference to the accompanying drawings, in which:
Fig. 1 is a longitudinal cross sectional view showing a compound shaft/bearing apparatus embodying the present invention;
Fig. 2 is a longitudinal cross sectional view showing another embodiment of the compound shaft/bearing apparatus of the present invention; and
Fig. 3 is a longitudinal cross sectional view showing a spindle motor embodying the present invention;
Fig. 4 is a longitudinal cross sectional view showing another embodiment of the spindle motor of the present invention;
Fig. 5 is a longitudinal cross sectional view showing a swing arm assembly embodying the present invention;
Fig. 6 is a longitudinal cross sectional view showing another embodiment of the swing arm assembly of the present invention; and

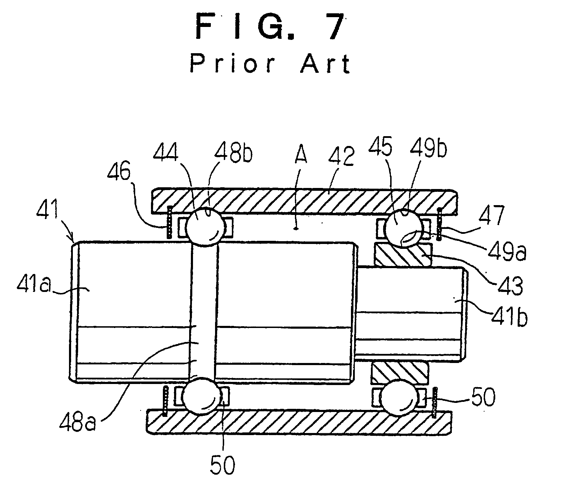

Fig. 7 is a longitudinal cross sectional view showing the compound shaft/bearing apparatus of the prior art.

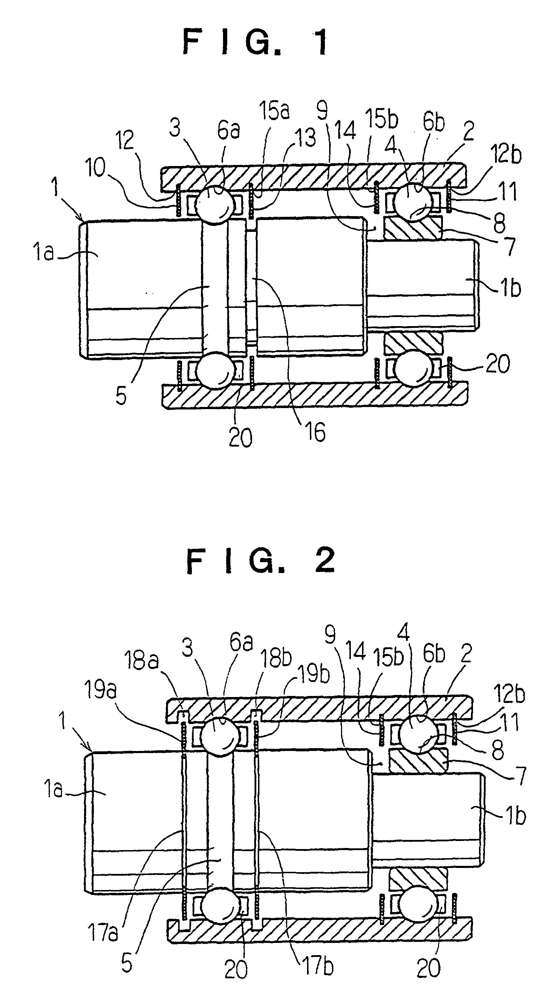

A compound shaft/bearing apparatus in accordance with the first and second embodiments of the present invention will now be described with reference to Figs. 1 and 2.

### <THE FIRST EMBODIMENT>

As can be seen from Fig. 1, the compound shaft/bearing apparatus of the first embodiment includes a stepped shaft 1 having an enlarged diameter shaft portion 1a and a reduced diameter shaft portion 1b, a cylindrical sleeve outer race 2 surrounding the stepped shaft, and two rows of rotating bodies, such as balls 3, 4, interposed therebetween.

The balls 3 of the first row (the left row in Fig. 1) are disposed between an outer peripheral rolling recess 5 formed directly around the outer peripheral surface of the enlarged diameter shaft portion 1a of said stepped shaft 1, and a first inner peripheral rolling recess 6a formed directly in the inner peripheral surface of said sleeve outer race 2.

The balls 4 of the second row (the right row in Fig. 1) are disposed between an outer peripheral rolling recess 8 provided around the outer peripheral surface of an inner race 7 fitted over the reduced diameter shaft portion 2a of said stepped shaft 1, and a second inner peripheral rolling recess 6b formed directly in the inner peripheral surface of the sleeve outer race 2.

The outer diameter of said inner race 7 is substantially identical with that of the enlarged diameter shaft portion 1a, so that balls of the same diameter can be employed as the balls 3, 4 of the first and second rows.

The inner race 7 may be attached to the shaft to leave a space 9 between an inner end of the inner race and a surface of a shoulder formed between the enlarged portion and reduced portion of the shaft.

On the left end of the bearing assembly, i.e. on one end to the left of the first row of balls 3, a first longitudinally outer sealing plate 10 is provided to seal the clearance defined between the enlarged diameter shaft portion 1a and the sleeve outer race 2. On the right end of the bearing assembly, i.e. on the other end to the right of the second row of balls 4, a second longitudinally outer sealing plate 11 is provided to seal the clearance defined between the inner race 7 and the sleeve outer race 2. The outer sealing plates 10, 11 are ring shaped and have a central aperture therethrough. The outer peripheries of the outer sealing plates 10, 11 are adapted to be fitted into inner peripheral grooves 12a, 12b formed in the inner peripheral surface of said sleeve outer race 2.

The inner diameter of the central aperture of the outer sealing plate 10 is slightly larger than the outer diameter of the enlarged diameter shaft portion 1a to leave a slight clearance therebetween to provide a labyrinth seal function.

The inner diameter of the central aperture of the outer sealing plate 11 is slightly larger than the outer diameter of the inner race 7 to leave a slight clearance therebetween to provide a labyrinth seal function.

The compound shaft/bearing apparatus further includes first and second longitudinally inner sealing plates 13, 14. The first inner sealing plate 13 is disposed to the right of the first row of balls 3, and the second inner sealing plate 14 is disposed to the left of the second row of balls 4.

These inner sealing plates 13, 14 are also ring shaped, and have a central aperture therethrough. The outer peripheries of the inner sealing plates 13, 14 are fitted into inner peripheral grooves 15a, 15b formed in the inner peripheral surface of said sleeve outer race 2.

An outer peripheral labyrinth recess 16 is formed around the enlarged diameter shaft portion 1a at the position where the radial plane defined by the first inner sealing plate 13 intersects the shaft 1. The inner diameter of the inner sealing plate 13 is substantially equal to or slightly larger than the outer diameter of the enlarged diameter shaft portion 1a to prevent the first inner sealing plate from contacting the shaft, and to provide a labyrinth seal function with the labyrinth recess 16.

Should the inner sealing plate 13 be formed with or from a pliable material, such as synthetic rubber, enhancement of the labyrinth seal function can be obtained by the reduction of the inner diameter of the aperture to a diameter slightly smaller than the outer diameter of the enlarged diameter shaft portion 1a.

The inner periphery of the second inner sealing plate 14 is disposed opposite a space 9 defined between the inner end of the inner race 7 and the surface of the shoulder. The inner diameter of the inner sealing plate 14 is substantially equal to or slightly larger than the outer diameter of the enlarged diameter shaft portion 1a to prevent the inner sealing plate from contacting the inner race or the shaft, and to provide a labyrinth seal function.

Should the inner sealing plate 14 also be formed with or from a pliable material, such as synthetic rubber, enhancement of the labyrinth seal function can be obtained by the reduction of the inner diameter of the aperture to a diameter slightly smaller than the outer diameter of the inner race 7.

The elements represented by reference numeral 20 are ball retainers.

The assembling operation of the compound bearing apparatus of the above mentioned first embodiment is carried out as follows.

The outer peripheries of the inner sealing plates 13 and 14 are fitted into the inner peripheral grooves 15a, 15b of the sleeve outer race 2, the stepped shaft 1 is inserted into the sleeve outer race 2, and then inner race 7 is fitted slidably around the reduced diameter shaft portion 1b of the stepped shaft.

Next, the stepped shaft 1 is displaced radially within the sleeve outer race to form a gap greater than the diameter of balls 3, 4 therebetween, and then these balls are loaded therethrough.

In this step of the assembling operation, the inner sealing plate 13 secured on the longitudinally inner side of balls 3 of the first row is adapted to enter the outer peripheral labyrinth groove 16, and the inner sealing plate 14 secured on the longitudinally inner side of balls 4 of the second row is adapted to enter the space 9 defined between inner end of the inner race 7 and the surface of the shoulder, so that the second inner sealing plates do not interfere with the radial displacement of the stepped shaft, and the loading of the balls 3, 4 can be effected easily.

After loading a predetermined number of balls, the balls are located equidistantly relative to each other by means of ball retainers 20, and then the inner race 7 is bonded or otherwise secured to the reduced diameter shaft portion under a predetermined pressure, and outer sealing plates 10, 11 are also fitted into the inner peripheral grooves 12a, 12b of the sleeve outer race and secured thereto.

### <THE SECOND EMBODIMENT>

Although the inner and outer sealing plates disposed on the opposite side of balls 3 of the first row are mounted in the inner peripheral surface of the sleeve outer race 2 in the embodiment of Fig. 1, the inner and outer sealing plates can alternatively be mounted in the enlarged diameter shaft portion 1a as shown in Fig. 2.

A pair of outer peripheral grooves 17a, 17b are formed distally and proximally to the outer peripheral rolling recess 5 formed in the enlarged diameter shaft portion 1a. Inner peripheral labyrinth grooves 18a, 18b are formed in the portions of the inner peripheral surface of the sleeve outer race 2 intersected by the radial planes including the outer peripheral grooves. Outer and inner sealing plates 19a, 19b including a central aperture are respectively fitted at their inner peripheries into the outer peripheral grooves 17a, 17b. The outer diameter of the sealing plates 19a, 19b is substantially equal to or slightly smaller than the inner diameter of the sleeve outer race 2 to prevent the inner sealing plates from contacting the sleeve outer race to provide the labyrinth seal function.

Should both of the outer and inner sealing plates 19a, 19b be formed with or from pliable material, such as synthetic rubber, enhancement of the labyrinth seal function can be obtained by enlarging the outer diameter of the sealing plates to a diameter slightly larger than the inner diameter of the sleeve outer race 2.

The assembling operation of the compound shaft/bearing apparatus of the above mentioned second embodiment is adapted to be carried out as follows.

The inner periphery of the inner sealing plate 19b is fitted into the outer peripheral groove 17b formed in the enlarged diameter shaft portion 1a inwardly of the outer peripheral rolling recess 5, and the outer periphery of the inner sealing plate 14 is fitted into the inner peripheral groove 15b of the sleeve outer race 2. Then the stepped shaft 1 is inserted with the first inner sealing plate into the sleeve outer race 2, and the inner race 7 is fitted slidably around the reduced diameter shaft portion 1b of the stepped shaft.

Next, the stepped shaft 1 is displaced radially within the sleeve outer race to form a gap greater than the diameter of balls 3, 4 therebetween, and then these balls are loaded therethrough into the inner and outer rolling recess.

In this step of the assembling operation, the inner sealing plate 19b secured on the longitudinally inner side of balls 3 of the first row is adapted to enter into the inner peripheral labyrinth groove 18b, and the inner sealing plate 14 secured on the longitudinally inner side of balls 4 of the second row is adapted to enter into the space 9 defined between inner end surface of the inner race 7 and the surface of the shoulder, so that the inner sealing plates do not interfere with the radial displacement of the stepped shaft, and the loading of the balls 3, 4 can be effected easily.

After loading the predetermined number of balls, the balls are located equidistantly relative to each other by means of ball retainers 20. Then, the inner race 7 is bonded or otherwise fixed to the reduced diameter shaft portion under a predetermined pressure, outer sealing plate 19a is fitted into the outer peripheral groove 17a of the enlarged shaft portion 1a, and the outer sealing plate 11 is fitted into the inner peripheral groove 12b of the sleeve outer race 2 and secured thereto.

Although balls are employed as rotating bodies in the above mentioned first and second embodiments, rollers could alternatively be employed to accomplish the same function.

### <THE EMBODIMENT OF THE SPINDLE MOTOR>

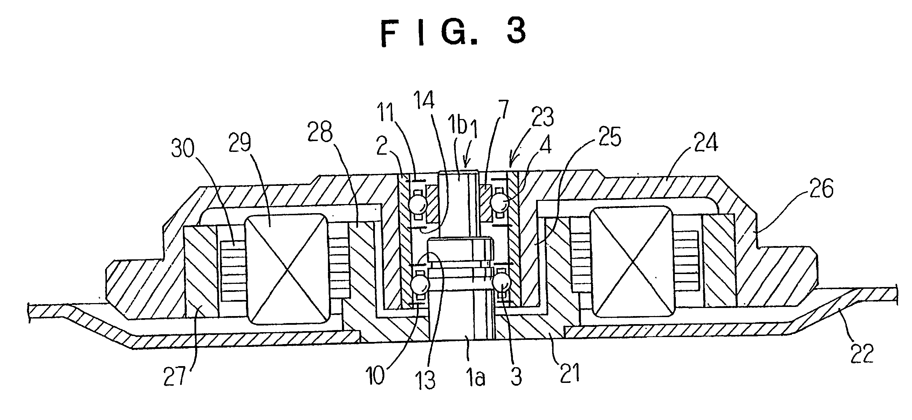

The spindle motor for a hard disk drive device incorporating the compound shaft/bearing apparatus of the above-mentioned first embodiment will now be described with reference to Fig.3.

A compound shaft/bearing apparatus 23 is secured centrally on a base 21 to extend vertically therefrom with the enlarged diameter shaft portion of the bearing being located at the bottom end thereof. The base 21 is provided with a flange 22 at the outer periphery thereof. A rotor hub 24, i.e. a rotating member of the motor, includes on its central lower surface a cylindrical central portion 25 having upper and lower openings. The cylindrical portion is formed integrally with the rotor hub using the same member. The cylindrical portion 25 is fitted over the sleeve outer race 2 of the compound shaft/bearing apparatus 23.

The rotor hub 24 is provided around the outer periphery thereof with a downwardly depending flange 26 having a disk mount portion for the disk or disks of the hard disk drive device. The inner peripheral surface of the downwardly depending flange is provided with rotor magnets 27 made of permanent magnets.

Stators 30 having respective coils 29 wound therearound are secured around a yoke holder 28 formed integrally with the base to extend upwardly therefrom so as to leave a slight clearance between the outer peripheral portion the stators and the inner peripheral surface of the rotor magnets 27. In this connection, the rotor hub is adapted to be rotatably driven by energizing the coils 29.

The assembling procedure of the spindle motor embodying the present invention is effected as described below.

The compound shaft/bearing apparatus 23 is press fitted and adhesively secured within the central cylindrical portion of the rotor hub 24. The base or lower end of the enlarged diameter shaft portion 1a of the stepped shaft 1 of the compound bearing apparatus is press fitted and adhesively secured within the bore of the base 21.

In the above-mentioned case, the stepped shaft 1 of the compound shaft/bearing apparatus is adapted to be secured to the base 21 so that the sleeve outer race 2 is adapted to be rotated together with the rotor hub 24, i.e. the spindle motor is of the fixed shaft type. A spindle motor of the rotating shaft type, may also incorporate the compound bearing apparatus. In this case, the sleeve 2 is secured to the base 21 and the stepped shaft 1 is adapted to be rotated together with the rotor hub 24.

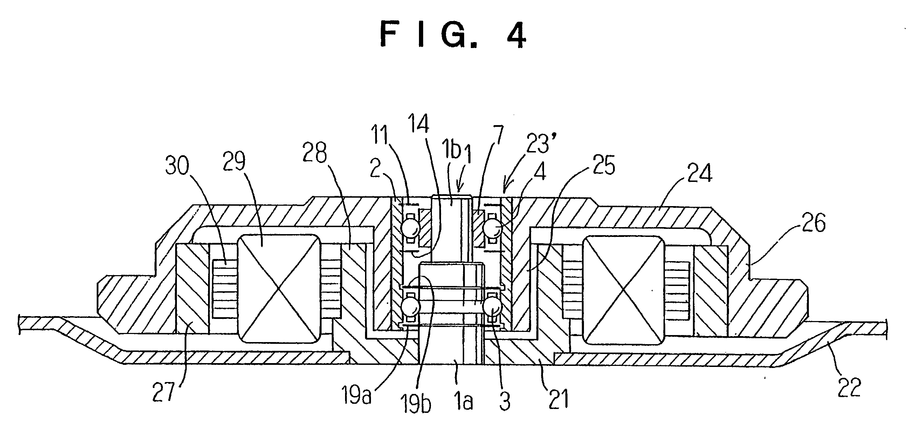

Further, although the compound shaft/bearing apparatus of the first embodiment shown in Fig. 1 is embodied in the spindle motor, the compound shaft/bearing apparatus 23' in accordance with the second embodiment as shown in Fig. 2 can also be used as shown in Fig. 4.

### < EMBODIMENT OF SWING ARM ASSEMBLY >

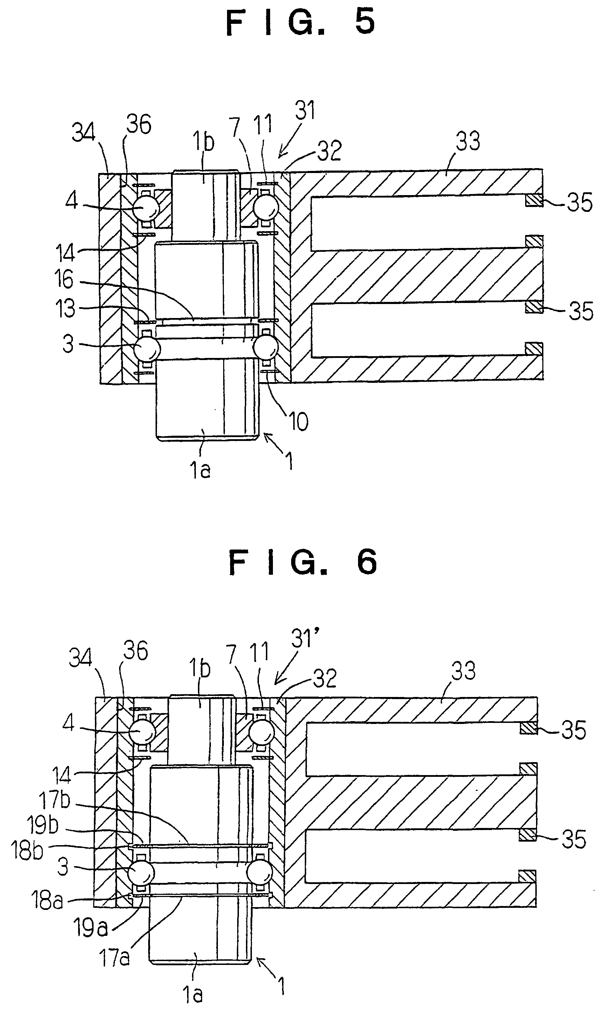

A swing arm assembly for a hard disk drive device is illustrated in Fig.5. This swing arm assembly includes the compound shaft/bearing apparatus of the above-mentioned first embodiment.

A base or a cylindrical portion 34 of a swing arm 33 is secured to the sleeve outer race 32 of the compound bearing apparatus 31. The swing arm 33 has mounts 35 for carrying the magnetic head of the hard disk drive device at its distal portion.

The compound shaft/bearing apparatus 31 is press fitted and adhesively secured within the bore 36 of the cylindrical portion 34 with interposing adhesive between the outer peripheral surface of the sleeve outer race 2 and the inner peripheral surface of the bore of the hub 34.

In the swing arm assembly of the construction as described above, magnetic heads (not shown) are adapted to be attached to the mounts 35, and the lower end of the enlarged diameter shaft portion 1a of the compound shaft/bearing apparatus 31 is secured on the base (not shown) of the hard disk drive device. The swing arm assembly can be rotated around the shaft by means of any appropriate actuator.

The above-described swing arm assembly is of the fixed shaft type in which the cylindrical portion 34 of the swing arm is secured around the sleeve outer race of the compound shaft/bearing apparatus and the stepped shaft is secured to the base of hard disk drive device. A swing arm assembly of the rotating shaft type may also incorporate the compound shaft/bearing apparatus. In this case, the cylindrical portion 34 is secured to the stepped shaft, and the sleeve outer race is secured to the base of hard disk drive device.

In the above-mentioned embodiment of the swing arm assembly, the compound shaft/bearing apparatus as shown in Fig. 1 is employed. Alternatively, a compound shaft/bearing apparatus as shown in Fig. 2 may be employed

### Advantages or effects obtained by the use of compound shaft/bearing apparatus embodying the present invention

The compound shaft/bearing apparatus embodying the present invention includes sealing plates at the longitudinally inner sides of each row of rotating bodies as well as at the longitudinally outer sides, so that the lubricant present around the rotating bodies, the rolling recesses, and the retainers, will be prevented from leaking out from the shaft/bearing apparatus. Thus, a compound shaft/bearing apparatus which is quiet in operation and has a long life can be obtained.

The labyrinth seal structure formed by the elements of the shaft/bearing apparatus such as the longitudinally inner and outer sealing plates, the sleeve outer race, and the shaft, does not produce frictional heat and does not affect the rotational torque, since there is no contact between the elements.

Further, the spindle motor incorporating the compound shaft/bearing apparatus also has a long life and maintains high rotational precision for a long period of time. The assembling procedure of the spindle motor can be effected easily merely by press fitting the compound shaft/bearing apparatus into the central cylindrical portion of the rotor hub and securing it thereto, for example by means of adhesive.

Additionally, the swing arm assembly incorporating the compound shaft/bearing apparatus also has a long life and maintains high rotational precision for a long period of time, so that the reliability of a hard disk drive device can be enhanced. The assembling procedure of the swing arm assembly can be effected easily merely by press fitting the compound shaft/bearing apparatus into the cylindrical portion of the base of the swing arm and securing it thereto by means of adhesive.

While particular embodiments of the present invention have been illustrated and described, it will be obvious to those skilled in the art that various changes and modifications can be made without departing from the scope of the invention as defined in the appended claims.

## Claims

1. A compound shaft/bearing apparatus including a stepped shaft (1) having enlarged (1a) and reduced (1b) diameter shaft portions, a sleeve outer race (2) surrounding the stepped shaft, and two rows (3, 4) of rotatable bodies interposed therebetween, wherein:
the rotatable bodies (3) of the first row are disposed between an outer peripheral rolling recess (5) formed directly in an outer peripheral surface of the enlarged diameter shaft portion (1a) and a first inner peripheral rolling recess (6a) formed directly in the inner peripheral surface of the sleeve outer race (2),
the rotatable bodies (4) of the second row are disposed between an outer peripheral rolling recess (8) formed in an outer periphery of an inner race (7) fitted over the reduced diameter shaft portion (1b) of said stepped shaft and a second inner peripheral rolling recess (6b) formed directly in the inner peripheral surface of the sleeve outer race (2),
at the longitudinal outer side of the rotatable bodies of the first row, a first outer sealing plate (10) of ring shape having a central aperture is disposed between the inner peripheral surface of the sleeve outer race (2) and the outer peripheral surface of the enlarged diameter shaft portion (1a),
the first outer sealing plate (10) is secured to one of the inner peripheral surface of the sleeve outer race (2) and the outer peripheral surface of the enlarged diameter shaft portion (1a) with a slight radial clearance between the inner or outer peripheral surface of the first outer sealing plate (10) and the other of the outer peripheral surface of the enlarged diameter shaft portion (1a) and the inner peripheral surface of the sleeve outer race (2) to act as a labyrinth seal,
at the longitudinal outer side of the rotatable bodies (4) of the second row, a second outer sealing plate (11) of ring shape having a central aperture is disposed between the inner peripheral surface of the sleeve outer race (2) and the outer peripheral surface of the inner race (7),
the second outer sealing plate (11) is secured to one of the inner peripheral surface of the sleeve outer race (2) and the outer peripheral surface of the inner race (7) with a slight radial clearance between the inner or outer peripheral surface of the second outer sealing plate (11) and the other of the outer peripheral surface of the inner race (7) and the inner peripheral surface of the sleeve outer race (2) to act as a labyrinth seal,
**characterised in that**
at the longitudinal inner side of the rotatable bodies (3) of the first row, a first inner sealing plate (13) of ring shape having a central aperture is disposed between the inner peripheral surface of the sleeve outer race (2) and the outer peripheral surface of the enlarged diameter shaft portion (1a),
the first inner sealing plate (13) is secured to one of the inner peripheral surface of the sleeve outer race (2) and the outer peripheral surface of the enlarged diameter shaft portion (1a) with a slight radial clearance between the inner or outer peripheral surface of the first inner sealing plate (13) and the other of the outer peripheral surface of the enlarged diameter shaft portion (1a) and the inner peripheral surface of the sleeve outer race (2) to act as a labyrinth seal,
at the longitudinal inner side of the rotatable bodies (4) of the second row, a second inner sealing plate (14) of ring shape having a central aperture is disposed between the inner peripheral surface of the sleeve outer race (2) and the outer peripheral surface of the inner race (7), and
the second inner sealing plate (14) is secured to one of the inner peripheral surface of the sleeve outer race (2) and the outer peripheral surface of the inner race (7) with a slight radial clearance between the inner or outer peripheral surface of the second inner sealing plate (14) and the other of the outer peripheral surface of the inner race (7) and the inner peripheral surface of the sleeve outer race (2) to act as a labyrinth seal.

2. Apparatus as claimed in claim 1, wherein:
the first and second outer and inner sealing plates (10, 13, 11, 14) are fitted at their outer peripheries into associated inner peripheral grooves (12, 15a, 12b, 15b) formed in the inner peripheral surface of the sleeve outer race (2),
a slight radial clearance is provided between the inner peripheral surfaces of said first outer sealing plate (10) and the enlarged diameter shaft portion (1a) to act as a labyrinth seal,
a slight radial clearance is provided between the inner peripheral surface of the second outer sealing plate (11) and the inner race (7) to act as a labyrinth seal,
a slight radial clearance is provided between the inner peripheral surface of the first inner sealing plate (13) and an outer peripheral labyrinth recess (16) formed in the outer peripheral surface of the enlarged diameter shaft portion (1a) at the longitudinal inner side of the rotatable bodies (3) of the first row to act as a labyrinth seal, and
a slight radial clearance is provided between the inner peripheral surface of the second inner sealing plate (14) and a space (9) defined between a shoulder formed at the juncture between the enlarged diameter shaft portion (1a) and the reduced diameter shaft portion (1b) and the inner end of the inner race (7) to act as a labyrinth seal.

3. Apparatus as claimed in claim 1, wherein:
the first outer and inner sealing plates (10, 13) are fitted at their inner peripheries into a pair of peripheral grooves (17a, 17b) formed on each side of the peripheral rolling recess (5) of the first row (3) of rotatable bodies, in the outer peripheral surface of the enlarged diameter shaft portion (1a), opposite a pair of outer and inner peripheral grooves (18a, 18b) formed on each side of the first inner peripheral rolling recess (6a) in the sleeve outer race (2) respectively, with a slight radial clearance between the outer peripheral surface of each sealing plate (10, 13) and each peripheral groove (18a, 18b) to act as a labyrinth seal,
the second outer and inner sealing plates (11, 14) are fixedly fitted at their outer peripheries into a pair of peripheral grooves (12b, 15b) formed on each side of the second inner peripheral rolling recess (6b) formed in the inner peripheral surface of the sleeve outer race (2) with a slight radial clearance between the inner peripheral surface of the outer sealing plate (11) and the inner race (7) to act as a labyrinth seal, and with a slight radial clearance between the inner peripheral surface of the inner sealing plate (14) and a space (9) defined between a shoulder formed at the juncture the enlarged diameter shaft portion (1a) and the reduced diameter shaft portion (1b) and an inner end of the inner race (7) to act as a labyrinth seal.

4. A spindle motor including a rotating member (24), such as a rotor hub, journalled on a base (21) by means of a compound shaft/bearing apparatus (23, 23') as claimed in claim 1, 2 or 3.

5. A swing arm assembly journalled rotatably on a base of a hard disk drive device through a compound shaft/bearing apparatus (31) as claimed in claim 1, 2 or 3, the compound shaft/bearing apparatus being located within a base cylindrical portion (34) of the swing arm assembly.

## Patentansprüche

1. Zusammengesetzte Welle/Lagereinheit umfassend eine abgestufte Welle (1) mit Wellenabschnitten mit vergrößertem (1a) und verkleinertem (1b) Durchmesser, ein die abgestufte Welle umgebender muffenähnlicher Außenlaufring (2) sowie zwei Reihen (3, 4) drehbarer Körper, die dazwischen angeordnet sind, wobei:
die drehbaren Körper (3) der ersten Reihe zwischen einer Außenrand-Rollaussparung (5) angeordnet sind, die direkt in der Oberfläche des Außenrands des Wellenabschnitts (1a) mit vergrößertem Durchmesser ausgeformt ist, sowie eine erste Innenrand-Rollaussparung (6a), die direkt in der Oberfläche des Innenrands des muffenähnlichen Aussenlaufrings (2) ausgeformt ist,
die drehbaren Körper (4) der zweiten Reihe zwischen einer Außenrand-Rollaussparung (8) angeordnet sind, die im Außenrand eines Innenlaufrings (7) ausgeformt ist, der auf dem Wellenabschnitt (1b) mit verkleinertem Durchmesser der abgestuften Welle passgenau aufsitzt, sowie eine zweite Innenrand-Rollaussparung (6b), die direkt in der Oberfläche des Innenrands des muffenähnlichen Außenlaufrings (2) ausgeformt ist,
sich an der in Längsrichtung liegenden Außenseite der drehbaren Körper der ersten Reihe eine erste äußere Abdichtplatte (10) in der Form eines Rings mit zentrischer Arbeitsöffnung zwischen der Oberfläche des Innenrands des muffenähnlichen Außenlaufrings (2) und der Oberfläche des Außenrands des Wellenabschnitts (1a) mit vergrößertem Durchmesser befindet,
die erste äußere Abdichtplatte (10) an einem von entweder der Oberfläche des Innenrands des muffenähnlichen Außenlaufrings (2) oder der Oberfläche des Außenrands des Wellenabschnitts (1a) mit vergrößertem Durchmesser befestigt ist, mit einem kleinen radialen Zwischenraum zwischen der Oberfläche des Innen- oder Außenrands der ersten äußeren Abdichtplatte (10) und dem anderen von entweder der Oberfläche des Außenrands des Wellenabschnitts (1a) mit vergrößertem Durchmesser oder der Oberfläche des Innenrands des muffenähnlichen Außenlaufrings (2), um gemeinsam als Labyrinthdichtung zu wirken,
sich an der in Längsrichtung liegenden Außenseite der drehbaren Körper (4) der zweiten Reihe eine zweite äußere Abdichtplatte (11) in der Form eines Rings mit zentrischer Arbeitsöffnung zwischen der Oberfläche des Innenrands des muffenähnlichen Außenlaufrings (2) und der Oberfläche des Außenrands des Innenlaufrings (7) befindet,
die zweite äußere Abdichtplatte (11) an einem von entweder der Oberfläche des Innenrands des muffenähnlichen Außenlaufrings (2) oder der Oberfläche des Außenrands des Innenlaufrings (7) befestigt ist, mit einem kleinen radialen Zwischenraum zwischen der Oberfläche des Innen- oder Außenrands der zweiten äußeren Abdichtplatte (11) und dem anderen von entweder der Oberfläche des Außenrands des Innenlaufrings (7) oder der Oberfläche des Innenrands des muffenförmigen Außenlaufrings (2), um als Labyrinthdichtung zu wirken,
**dadurch gekennzeichnet, dass**
sich an der in Längsrichtung liegenden Innenseite der drehbaren Körper (3) der ersten Reihe eine erste innere Abdichtplatte (13) in der Form eines Rings mit zentrischer Arbeitsöffnung zwischen der Oberfläche des Innenrands des muffenförmigen Außenlaufrings (2) und der Oberfläche des Außenrands des Wellenabschnitts (1a) mit vergrößertem Durchmesser befindet,
die erste innere Abdichtplatte (13) an einem von entweder der Oberfläche des Innenrands des muffenähnlichen Außenlaufrings (2) oder der Oberfläche des Außenrands des Wellenabschnitts (1a) mit vergrößertem Durchmesser befestigt ist, mit einem kleinen radialen Zwischenraum zwischen der Oberfläche des Innen- oder Außenrands der ersten inneren Abdichtplatte (13) und dem anderen von entweder der Oberfläche des Außenrands des Wellenabschnitts (1a) mit vergrößertem Durchmesser oder der Oberfläche des Innenrands des muffenförmigen Außenlaufrings (2), um als Labyrinthdichtung zu wirken,
sich an der in Längsrichtung liegenden Innenseite der drehbaren Körper (4) der zweiten Reihe eine zweite innere Abdichtplatte (14) in der Form eines Rings mit zentrischer Arbeitsöffnung zwischen der Oberfläche des Innenrands des muffenförmigen Außenlaufrings (2) und der Oberfläche des Außenrands des Innenlaufrings (7) befindet, und
die zweite innere Abdichtplatte (14) an einem von entweder der Oberfläche des Innenrands des muffenförmigen Außenlaufrings (2) oder der Oberfläche des Außenrands des Innenlaufrings (7) befestigt ist, mit einem kleinen radialen Zwischenraum zwischen der Oberfläche des Innen- oder Außenrands der zweiten inneren Abdichtplatte (14) und dem anderen von entweder der Oberfläche des Außenrands des Innenlaufrings (7) oder der Oberfläche des Innenrands des muffenförmigen Außenlaufrings (2), um als Labyrinthdichtung zu wirken.

2. Vorrichtung nach Anspruch 1, wobei:
die ersten und zweiten äußeren und inneren Abdichtplatten (10, 13, 11, 14) an ihren Außenrändern in zugeordnete Innenrand-Rillen (12, 15a, 12b, 15b) eingepasst sind, welche in der Oberfläche des Innenrands des muffenähnlichen Außenlaufrings (2) ausgeformt sind,
ein kleiner radialer Zwischenraum zwischen den Oberflächen des Innenrands der ersten äußeren Abdichtplatte (10) und des Wellenabschnitts (1a) mit dem vergrösserten Durchmesser besteht, um als Labyrinthdichtung zu wirken,
ein kleiner radialer Zwischenraum zwischen der Oberfläche des Innenrands der zweiten äußeren Abdichtplatte (11) und des Innenlaufrings (7) besteht, um als Labyrinthdichtung zu wirken,
ein kleiner radialer Zwischenraum zwischen der Oberfläche des Innenrands der ersten inneren Abdichtplatte (13) und einer Außenrand-Labyrinthaussparung (16) besteht, die in der Oberfläche des Außenrands des Wellenabschnitts (1a) mit vergrössertem Durchmesser an der in Längsrichtung liegenden Innenseite der drehbaren Körper (3) der ersten Reihe ausgeformt ist, um als Labyrinthdichtung zu wirken,
ein kleiner radialer Zwischenraum zwischen der Oberfläche des Innenrands der zweiten inneren Abdichtplatte (14) und einem Zwischenraum (9) besteht, welcher zwischen einer Schulter, die an der Verbindungsstelle zwischen dem Wellenabschnitt (1a) mit vergrößertem Durchmesser und dem Wellenabschnitt (1b) mit verkleinertem Durchmesser gebildet wird, und dem innenseitigen Abschluss des Innenlaufrings (7) begrenzt wird, um als Labyrinthdichtung zu wirken.

3. Vorrichtung nach Anspruch 1, wobei:
die ersten äußeren und inneren Abdichtplatten (10, 13) an ihren Innenrändern in ein Paar Randrillen (17a, 17b) eingepasst sind, welche auf jeder Seite der Rand-Rollaussparung (5) der ersten Reihe (3) drehbarer Körper ausgeformt sind, und zwar in der Oberfläche des Außenrands des Wellenabschnitts (1a) mit vergrößertem Durchmesser, gegenüber einem Paar außen bzw. innen befindlicher Randrillen (18a, 18b), welche auf jeder Seite der ersten Innenrand-Rollaussparung (6a) in dem muffenähnlichen Außenlaufrings (2) ausgeformt sind, mit einem kleinen radialen Zwischenraum zwischen der Oberfläche des Außenrands jeder Abdichtplatte (10, 13) und jeder Randrille (18a, 18b), um als Labyrinthdichtung zu wirken,
die zweiten äußeren und inneren Abdichtplatten (11, 14) fest an ihren Außenrändern in ein Paar Randrillen (12b, 15b) eingepasst sind, welche auf jeder Seite der zweiten Innenrand-Rollaussparung (6b) ausgeformt sind, welche in der Oberfläche des Innenrands des muffenähnlichen Außenlaufrings (2) ausgeformt ist, mit einem kleinen radialen Zwischenraum zwischen der Oberfläche des Innenrands der äußeren Abdichtplatte (11) und dem Innenlaufring (7), um als Labyrinthdichtung zu wirken, sowie mit einem kleinen radialen Zwischenraum zwischen der Oberfläche des Innenrands der inneren Abdichtplatte (14) und einem Zwischenraum (9), welcher zwischen der Schulter, die an der Verbindungsstelle zwischen dem Wellenabschnitt (1a) mit vergrößertem Durchmesser und dem Wellenabschnitt (1b) mit verkleinertem Durchmesser gebildet wird, und dem innenseitigen Abschluss des Innenlaufrings (7) begrenzt wird, um als Labyrinthdichtung zu wirken.

4. Ein Spindelmotor umfassend ein drehendes Bauteil (24) nach Art einer Rotornabe, welche wie auf einem Lagerzapfen mittels einer zusammengesetzten Welle/Lagereinheit (23, 23') nach Anspruch 1, 2 oder 3 auf einen Sockel (21) aufgesetzt ist.

5. Eine Schwingarm-Baugruppe, die drehbar wie auf einem Lagerzapfen auf einen Sockel eines Festplattenantriebs mittels einer zusammengesetzten Welle/Lagereinheit (31) nach Anspruch 1, 2 oder 3 aufgesetzt ist, wobei die zusammengesetzte Welle/Lagereinheit innerhalb eines zylindrischen Sockelabschnitts (34) der Schwingarm-Baugruppe angeordnet ist.

## Revendications

1. Dispositif combiné d'arbre/palier comprenant un arbre à étagement (1) présentant des parties d'arbre à diamètre agrandi (1a) et réduit (1b), une bague extérieure en manchon (2) entourant l'arbre à étagement, et deux séries (3, 4) de corps rotatifs intercalés entre ceux-ci, où :
les corps rotatifs (3) de la première série sont disposés entre un évidement de roulement périphérique extérieur (5) formé directement dans une surface périphérique extérieure de la partie d'arbre à diamètre agrandi (1a) et un premier évidement de roulement périphérique intérieur (6a) formé directement dans la surface périphérique intérieure de la bague extérieure en manchon (2),
les corps rotatifs (4) de la seconde série sont disposés entre un évidement de roulement périphérique extérieur (8) formé dans une périphérie extérieure d'une bague intérieure (7) montée sur la partie d'arbre à diamètre réduit (1b) dudit arbre à étagement, et un second évidement de roulement périphérique intérieur (6b) formé directement dans la surface périphérique intérieure de la bague extérieure en manchon (2),
du côté longitudinal extérieur des corps rotatifs de la première série, une première plaque extérieure d'étanchéité (10) en forme de couronne comportant une ouverture centrale est disposée entre la surface périphérique intérieure de la bague extérieure en manchon (2) et la surface périphérique extérieure de la partie d'arbre à diamètre agrandi (1a),
la première plaque d'étanchéité extérieure (10) est fixée sur l'une de la surface périphérique intérieure de la bague extérieure en manchon (2) et de la surface périphérique extérieure de la partie d'arbre à diamètre agrandi (1a), avec un léger jeu radial entre la surface périphérique intérieure ou extérieure de la première plaque d'étanchéité extérieure (10) et l'autre de la surface périphérique extérieure de la partie d'arbre à diamètre agrandi (1a) et de la surface périphérique intérieure de la bague extérieure en manchon (2), pour agir comme un joint à labyrinthe,
au niveau du côté longitudinal extérieur des corps rotatifs (4) de la seconde série, une seconde plaque extérieure d'étanchéité (11) en forme de couronne comportant une ouverture centrale est disposée entre la surface périphérique intérieure de la bague extérieure en manchon (2) et la surface périphérique extérieure de la bague intérieure (7),
la seconde plaque d'étanchéité extérieure (11) est fixée à l'une de la surface périphérique intérieure de la bague extérieure en manchon (2) et de la surface périphérique extérieure de la bague intérieure (7), avec un léger jeu radial entre la surface périphérique intérieure ou extérieure de la seconde plaque d'étanchéité extérieure (11) et l'autre de la surface périphérique extérieure de la bague intérieure (7) et de la surface périphérique intérieure de la bague extérieure en manchon (2), pour agir comme un joint à labyrinthe,
**caractérisé en ce que** du côté longitudinal intérieur des corps rotatifs (3) de la première série, une première plaque intérieure d'étanchéité (13) en forme de couronne comportant une ouverture centrale est disposée entre la surface périphérique intérieure de la bague extérieure en manchon (2) et la surface périphérique extérieure de la partie d'arbre à diamètre agrandi (la),
la première plaque d'étanchéité intérieure (13) est fixée à l'une de la surface périphérique intérieure de la bague extérieure en manchon (2) et de la surface périphérique extérieure de la partie d'arbre à diamètre agrandi (1a), avec un léger jeu radial entre la surface périphérique intérieure ou extérieure de la première plaque d'étanchéité intérieure (13) et l'autre de la surface périphérique extérieure de la partie d'arbre à diamètre agrandi (la) et de la surface périphérique intérieure de la bague extérieure en manchon (2) pour agir comme un joint à labyrinthe,
du côté longitudinal intérieur des corps rotatifs (4) de la seconde série, une seconde plaque intérieure d'étanchéité (14) en forme de couronne comportant une ouverture centrale est disposée entre la surface périphérique intérieure de la bague extérieure en manchon (2) et la surface périphérique extérieure de la bague intérieure (7), et
la seconde plaque d'étanchéité intérieure (14) est fixée à l'une de la surface périphérique intérieure de la bague extérieure en manchon (2) et de la surface périphérique extérieure de la bague intérieure (7), avec un léger jeu radial entre la surface périphérique intérieure ou extérieure de la seconde plaque d'étanchéité intérieure (14) et l'autre de la surface périphérique extérieure de la bague intérieure (7) et de la surface périphérique intérieure de la bague extérieure en manchon (2), pour agir comme un joint à labyrinthe.

2. Dispositif selon la revendication 1, dans lequel :
les première et seconde plaques d'étanchéité extérieure et intérieure (10, 13, 11, 14) sont montées au niveau de leurs périphéries extérieures dans des rainures périphériques intérieures associées (12, 15a, 12b, 15b) formées dans la surface périphérique intérieure de la bague extérieure en manchon (2),
un léger jeu radial est prévu entre les surfaces périphériques intérieures de ladite première plaque d'étanchéité extérieure (10) et la partie d'arbre à diamètre agrandi (1a), pour agir comme un joint à labyrinthe,
un léger jeu radial est prévu entre la surface périphérique intérieure de la seconde plaque d'étanchéité extérieure (11) et la bague intérieure (7), pour agir comme un joint à labyrinthe,
un léger jeu radial est prévu entre la surface périphérique intérieure de la première plaque d'étanchéité intérieure (13) et un évidement de labyrinthe périphérique extérieur (16) formé dans la surface périphérique extérieure de la partie d'arbre à diamètre agrandi (1a), du côté longitudinal intérieur des corps rotatifs (3) de la première série, pour agir comme un joint à labyrinthe, et
un léger jeu radial est prévu entre la surface périphérique intérieure de la seconde plaque d'étanchéité intérieure (14) et un espace (9) défini entre un épaulement formé au niveau de la jonction entre la partie d'arbre à diamètre agrandi (la) et la partie d'arbre à diamètre réduit (1b) et l'extrémité intérieure de la bague intérieure (7), pour agir comme un joint à labyrinthe.

3. Dispositif selon la revendication 1, dans lequel :
les premières plaques d'étanchéité extérieure et intérieure (10, 13) sont montées au niveau de leurs périphéries intérieures dans une paire de rainures périphériques (17a, 17b) formées de chaque côté de l'évidement de roulement périphérique (5) de la première série (3) de corps rotatifs, dans la surface périphérique extérieure de la partie d'arbre à diamètre agrandi (1a), opposées à une paire de rainures périphériques extérieure et intérieure (18a, 18b) formées sur chaque côté du premier évidement de roulement périphérique intérieur (6a) dans la bague extérieure en manchon (2), respectivement, avec un léger jeu radial entre la surface périphérique extérieure de chaque plaque d'étanchéité (10, 13) et chaque rainure périphérique (18a, 18b), pour agir comme un joint à labyrinthe,
les secondes plaques d'étanchéité extérieure et intérieure (11, 14) sont montées de façon fixe au niveau de leurs périphéries extérieures dans une paire de rainures périphériques (12b, 15b) formées sur chaque côté du second évidement de roulement périphérique intérieur (6b) formé dans la surface périphérique intérieure de la bague extérieure en manchon (2), avec un léger jeu radial entre la surface périphérique intérieure de la plaque d'étanchéité extérieure (11) et la bague intérieure (7), pour agir comme un joint à labyrinthe, et avec un léger jeu radial entre la surface périphérique intérieure de la plaque d'étanchéité intérieure (14) et un espace (9) défini entre un épaulement formé au niveau de la jonction de la partie d'arbre à diamètre agrandi (1a) et de la partie d'arbre à diamètre réduit (1b) et une extrémité intérieure de la bague intérieure (7), pour agir comme un joint à labyrinthe.

4. Moteur axial comprenant un élément rotatif (24), tel qu'un moyeu de rotor, tourillonné sur une base (21) au moyen d'un dispositif combiné d'arbre/palier (23, 23') selon la revendication 1, 2 ou 3.

5. Ensemble de bras oscillant tourillonné avec possibilité de rotation sur une base d'un dispositif de lecteur de disque dur par l'intermédiaire d'un dispositif combiné d'arbre/palier (31) selon la revendication 1, 2 ou 3, ledit dispositif combiné d'arbre/palier étant situé à l'intérieur d'une partie cylindrique de base (34) de l'ensemble de bras oscillant.
